# EUROPEAN PATENT APPLICATION

(11) **EP 0 865 862 A1**
(43) Date of publication of application: **23.09.1998**
(21) Application number: 98103484.6
(22) Date of filing: 27.02.1998
(51) Int. Cl.: B23K 20/02, B23K 37/053

(54) **Clamp mechanism of diffusion bonding apparatus**

(30) Priority: 10.03.1997 JP 74579/97
(71) Applicant: Daido Tokushuko Kabushiki Kaisha, Nagoya-shi, Aichi Pref. 460-0003 (JP)
(72) Inventor: Tsuchiya, Masaki, Yokkaichi-shi Mie-ken (JP)
(74) Representative: VOSSIUS & PARTNER

(57) **Abstract**

A clamp mechanism of diffusion bonding apparatus comprising a first clamp unit for gripping near the end portion of the bonding object, and a second clamp unit for gripping the bonding object at a position farther from the end portion of the bonding object than the first clamp unit, in which deformation of the end portion of the bonding object is prevented by the first clamp unit, and the second clamp unit grips so as to obtain a desired pressing force at the bonded joint of the bonding object.

## Description

The present invention relates to a clamp mechanism of a diffusion bonding apparatus. More particularly, it relates to a clamp mechanism of a diffusion bonding apparatus capable of clamping the bonding object while preventing deformation of the bonding end of the bonding object.

Hitherto, various products have been manufactured by employing diffusion bonding owing to high quality of the bonding interface. By manufacturing oil-well pipes by employing the diffusion bonding, it is expected to obtain oil-well pipes improved in the quality of the bonded interface.

However, most products manufactured by employing the diffusion bonding are relatively small in size, and hence the conventional diffusion bonding apparatus cannot be applied in manufacture of a long piping extended in a distance of several kilometers in the length after bonding such as the oil-well pipe.

The present applicant previously proposed a diffusion bonding apparatus capable of manufacturing a long piping such as oil-well pipe by diffusion bonding (Japanese Patent Application No. 8-128970).

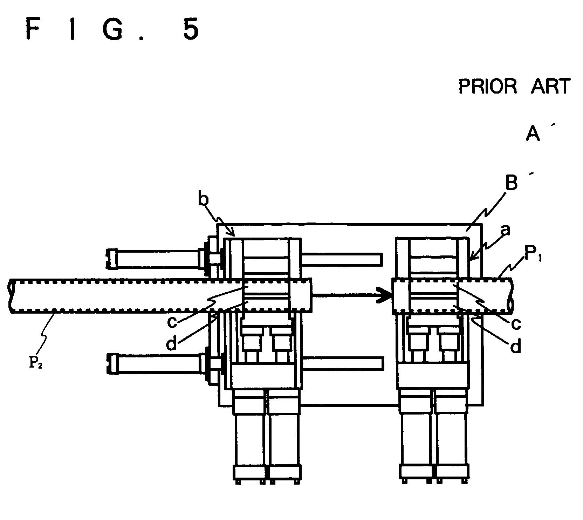

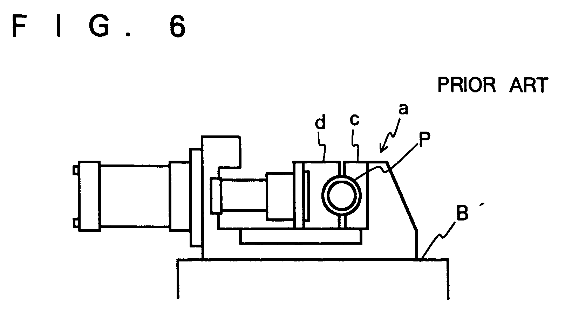

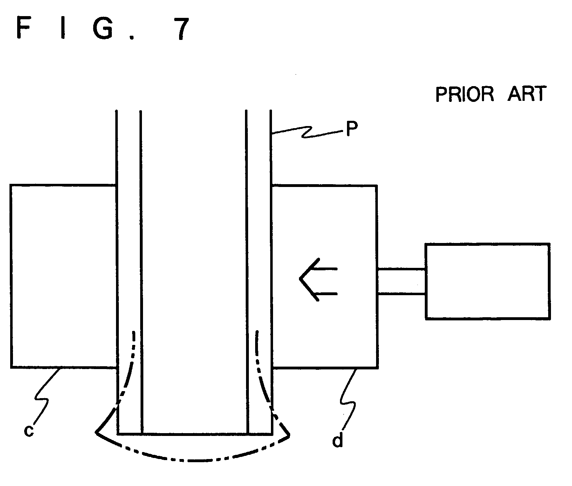

However, in the diffusion bonding apparatus A' of the proposal, as shown in, for example, Fig. 5 and Fig. 6, a fixed clamp a fixed at one side (downstream side) of a bed B' and a movable clamp b movable back and forth to and from the fixed clamp a at other side (upstream side) of the bed B' are provided, and end portions of pipes P1, P2 of the bonding objects are gripped by a fixed pawl block c and a movable pawl block d of the clamps a, b, respectively, and a desired pressing force at the bonding end of the pipes P1, P2 is obtained, and hence it was found that the end portion of the pipe P is deformed by this gripping force as indicated by double dot chain line in Fig. 7. In addition, it was also found that the desired joint strength is not obtained at the bonded joint when such deformation occurs. In Fig. 7, the deformation of the end portion of the pipe P is emphasized for the ease of understanding.

The invention is devised to solve such problems of the prior art, and it is hence an object thereof to present a clamp mechanism of diffusion bonding apparatus capable of obtaining a desired gripping force without causing deformation in the end portion of the bonding object at the time of diffusion bonding.

The invention relates to a clamp mechanism of diffusion bonding apparatus, being a clamp mechanism of diffusion bonding apparatus comprising gripping means constituted so as not to cause deformation to lower the joint strength in the end portion of the bonding object.

The invention also relates to a clamp mechanism of diffusion bonding apparatus comprising a first clamp unit for gripping near the end portion of the bonding object, and a second clamp unit for gripping the bonding object at a position farther from the end portion of the bonding object than the first clamp unit, in which deformation of the end portion of the bonding object is prevented by the first clamp unit, and the second clamp unit grips so as to obtain a desired pressing force at the bonded joint of the bonding object. Herein, the spacing distance of the first clamp unit and second clamp unit is at least five times of the diameter of the bonding object.

In the clamp mechanism of diffusion bonding apparatus of the invention, the clamp unit comprises a first pawl block fixed on a bed or movable table of the diffusion bonding apparatus main body with the gripping portion directed upward, and a second pawl block and a third pawl block fixed in a mounting member disposed on the bed or movable table of the diffusion bonding apparatus main body with the gripping portion confronting, of which lower portion is rotatable and the upper portion is driven by driving means disposed on the opposite side of the gripping portion; or comprises a first pawl block fixed on a bed or movable table of the diffusion bonding apparatus main body with the gripping portion directed upward, a second pawl block disposed at a specific angle to the first pawl block, being moved back and forth by driving means installed on a mounting member disposed on the bed or movable bed, and a third pawl block disposed at a specific angle to the first pawl block, being moved back and forth by driving means installed on a mounting member disposed on the bed or movable bed; or further comprises first driving means for moving back and forth a first pawl block held by a holding member disposed in the diffusion bonding apparatus main body, second driving means for moving back and forth a second pawl block held in the holding block at a specific angle to the first driving means, and third driving means for moving back and forth a third pawl block held in the holding block at a specific angle to the first driving means.

The clamp mechanism of the invention is thus constituted, and therefore if the bonding object is gripped by the clamp mechanism, the end portion is not deformed as in the prior art. Accordingly, the joint strength is not lowered due to deformation of the end portion of the bonding object as in the prior art.

### BRIEF DESCRIPTION OF THE DRAWINGS

Fig. 1 is a plan view of a diffusion bonding apparatus having a clamp mechanism in embodiment 1 of the invention;
Fig. 2 is its side view;
Fig. 3 is a side view of a clamp unit of a clamp mechanism in embodiment 2 of the invention;
Fig. 4 is a side view of a clamp unit of a clamp mechanism in embodiment 3 of the invention;
Fig. 5 is a plan view of a diffusion bonding apparatus with a clamp mechanism in prior art;
Fig. 6 is its side view; and
Fig. 7 is an explanatory diagram showing deformation of end portion in the case of gripping a pipe by a clamp mechanism in prior art.

### DETAILED DESCRIPTION OF THE INVENTION

Referring now to the accompanying drawings, embodiments of the invention are described below, but it must be noted that the invention is not limited to the illustrated embodiments alone.

### Embodiment 1

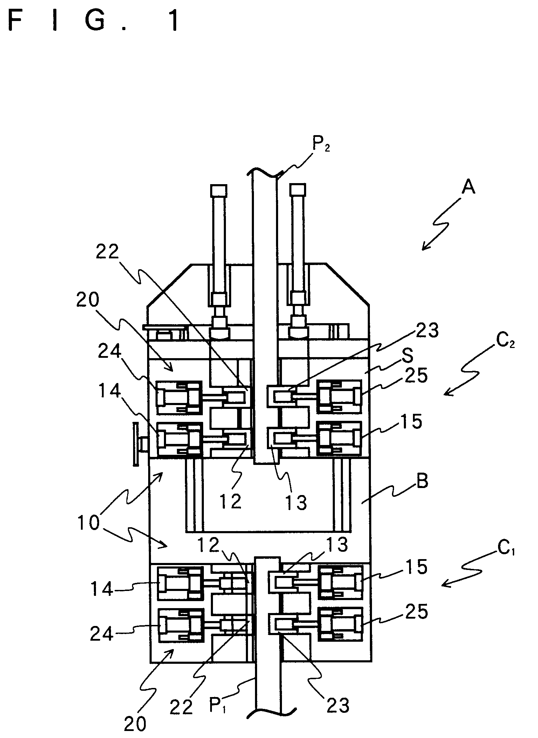

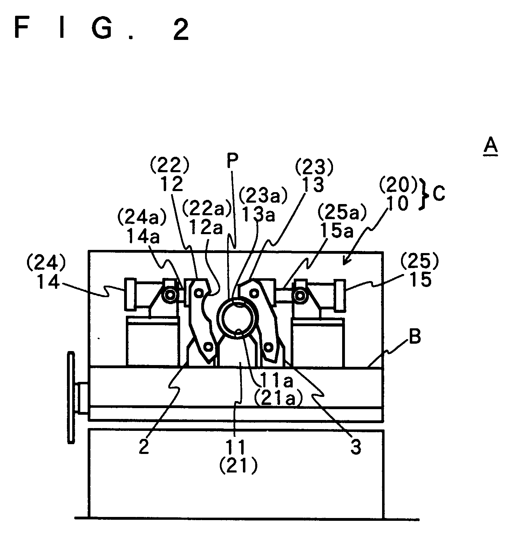

A diffusion bonding apparatus A having a clamp mechanism according to embodiment 1 of the invention is shown in Fig. 1 and Fig. 2, and this clamp mechanism C is disposed at both discharge side and feed side of the bonding object, and each one of the clamp mechanisms C1, C2 comprises a first clamp unit 10 for gripping near the end portion of the bonding object P, and a second clamp unit 20 for gripping the bonding object P at a position farther from the end portion of the bonding object P than the first clamp unit 10. The gripping force of the first clamp 10 is only such an extent as to correct the deformation of the end portion of the bonding object P, while the gripping force of the second clamp is enough to obtain a desired pressing force at the bonded joint of the bonding object P. That is, the clamp mechanism C comprises gripping means constituted so as not to cause such deformation as to lower the joint strength at the end portion of the bonding object P, more specifically, the first clamp unit 10 and second clamp unit 20.

In this embodiment 1, the bonding object P is a pipe.

The first clamp unit 10 of the clamp mechanism (discharge side clamp mechanism) C1 gripping the discharge side pipe P1 comprises, further specifically, a first pawl block 11 having an arcuate gripping portion 11a, a second pawl block 12 having an arcuate gripping portion 12a, and a third pawl block 13 having an arcuate gripping portion 13a, and the first pawl block 11 is fixed on a bed B of the main body of the diffusion bonding apparatus A with its gripping portion 11a directed upward, and the lower portions of the second pawl block 12 and third pawl block 13 are rotatably fixed, oppositely to their gripping portions 12a, 13a, in mounting members 2, 3 provided in the bed B of the main body, and further piston rods 14a, 15a of pawl driving hydraulic cylinders 14, 15 provided at each outer side are connected to each upper portion, and the second pawl block 12 and third pawl block 13 are rotated by the pawl driving hydraulic cylinders 14, 15, respectively. In this case, the driving force of the pawl driving hydraulic cylinders 14, 15 is adjusted so that a gripping force only to correct the deformation of the end portions of the pipes P1, P2 may be applied to the second pawl block 12 or third pawl block 13.

The second clamp unit 20, same as the first clamp unit 10, comprises a first pawl block 21 having a gripping portion 21a, a second pawl block 22 having a gripping portion 22a, and a third pawl block 23 having a gripping portion 23a, and the first pawl block 21 is fixed on the bed B of the main body with its gripping portion 21a directed upward, and the lower portions of the second pawl block 22 and third pawl block 23 are rotatably fixed, oppositely to their gripping portions 22a, 23a, in the mounting members 2, 3 provided in the bed B of the main body, and further piston rods 24a, 25a of pawl driving hydraulic cylinders 24, 25 provided at each outer side are connected to each upper portion, and the second pawl block 22 and third pawl block 23 are rotated by the pawl driving hydraulic cylinders 24, 25, respectively. In this case, the driving force of the pawl driving hydraulic cylinders 24, 25 is adjusted so that a gripping force enough to obtain a desired gripping force at the end portions of the pipes P1, P2 may be applied to the second pawl block 22 or third pawl block 23. Herein, in order to simplify the drawings, the elements of the second clamp unit 20 are enclosed in parentheses in Fig. 2.

The clamp mechanism (feed side clamp mechanism) C2 for gripping the feed side pipe P2 is constituted same as the discharge side clamp mechanism C1, except that first pawl blocks 11, 21, second pawl blocks 12, 22, and third pawl blocks 13, 23 are fixed on a movable table S which is provided movably on the bed B of the main body.

Thus, in embodiment 1 the clamp mechanism C is composed of the first clamp unit 10 and second clamp unit 20, and the gripping force of the first clamp unit 10 is only to correct the deformation of the end portion of the pipe P, while the gripping force of the second clamp unit 20 is enough to obtain a desired pressing force at the bonded joint of the pipe P, and therefore if the pipe P is gripped by the clamp mechanism C, deformation experienced in the prior art does not occur. Hence, unlike the prior art, it is free from lowering of the joint strength due to deformation of the end portion of the pipe P.

### Embodiment 2

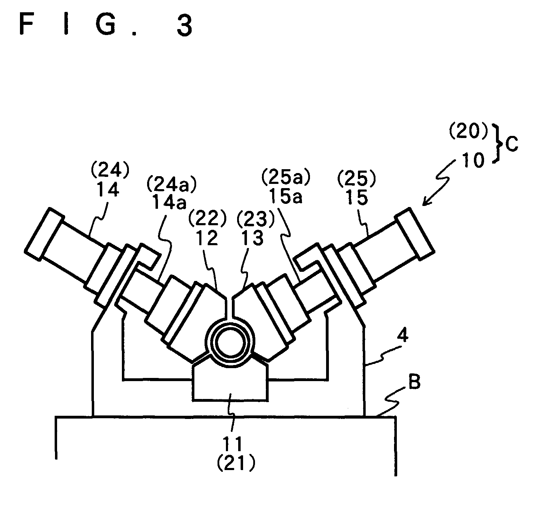

The clamp unit of the clamp mechanism C according to embodiment 2 of the invention is shown in a side view in Fig. 3, and this embodiment 2 is a modified example of embodiment 1, and the second pawl blocks 12, 22 and third pawl blocks 13, 23 of the first clamp unit 10 and second clamp unit 20 are free to move back and forth, with their back sides connected to the leading ends of the piston rods 14a, 24a, 15a, 25a of the pawl driving hydraulic cylinders 14, 25, 15, 25 installed obliquely downward at a specified angle in the mounting member 4 disposed in the bed B. The other constitution, functions and effects of this embodiment 2 are same as in embodiment 1. Meanwhile, in order to simplify the drawings, the elements of the second clamp unit 20 are enclosed in parentheses in Fig. 3.

### Embodiment 3

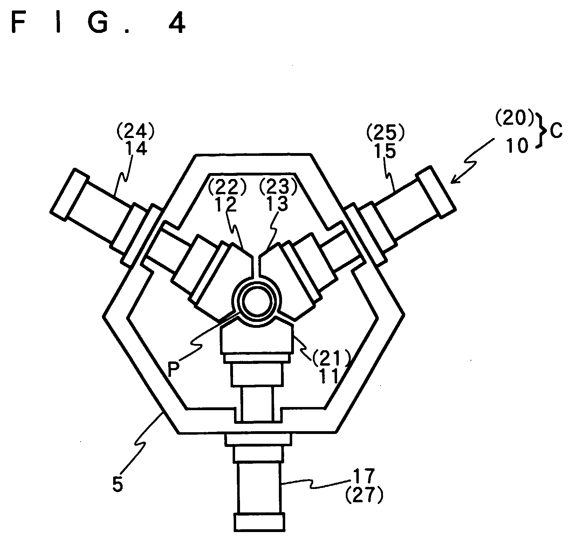

A clamp mechanism C in embodiment 3 is shown in Fig. 4, and this embodiment 3 is applied to the pipe P which is supplied vertically, unlike embodiment 1 and embodiment 2 which are mainly applied to the diffusion bonding apparatus A in which the pipe P is supplied horizontally. Accordingly, in embodiment 3, the first pawl blocks 11, 21 of the first clamp unit 10 and second clamp unit 20 are also moved back and forth freely by the pawl driving hydraulic cylinders 17, 27, and the pawl driving hydraulic cylinders 17, 27, 14, 24, 15, 25 for moving back and forth the pawl blocks 11 21, 12, 22 13, 23 are held by a holding member 5 provided in the diffusion bonding apparatus. The other constitution, functions and effects of this embodiment 3 are same as in embodiment 1. Meanwhile, in order to simplify the drawings, the elements of the second clamp unit 20 are enclosed in parentheses in Fig. 4.

The invention is herein described by referring to the embodiments, and in any embodiment, in order to decrease the effects of deformation of the gripping force of the second clamp unit 20 on the end portion, the spacing distance of the first clamp unit 10 and second clamp unit 20 is preferred to be five times or more of the diameter of the bonding object P. The invention is not limited to these embodiments alone, but may be modified in various manners. For example, in the foregoing embodiments, the bonding objects are pipes, but the bonding objects are not limited to pipes only, and may include, for example, rails.

In the present invention, as described above, the clamp mechanism of the diffusion bonding apparatus comprises gripping means constituted so as not to cause deformation to lower the joint strength in the end portion of the bonding object, which brings about an excellent effect so as not to cause deformation, as experienced in the prior art, in the end portion if the bonding object is gripped by the clamp mechanism. It hence brings about another effect not to cause lowering of joint strength due to deformation of the end portion of the bonding object as in the prior art.

## Claims

1. A clamp mechanism of diffusion bonding apparatus, being a clamp mechanism of diffusion bonding apparatus comprising gripping means constituted so as not to cause deformation to lower the joint strength in the end portion of the bonding object.

2. A clamp mechanism of diffusion bonding apparatus comprising a first clamp unit for gripping near the end portion of the bonding object, and a second clamp unit for gripping the bonding object at a position farther from the end portion of the bonding object than the first clamp unit,
wherein deformation of the end portion of the bonding object is prevented by the first clamp unit, and the second clamp unit grips so as to obtain a desired pressing force at the bonding end of the bonding object.

3. The clamp mechanism of diffusion bonding apparatus of claim 2, wherein the spacing distance of the first clamp unit and second clamp unit is at least five times of the diameter of the bonding object.

4. The clamp mechanism of diffusion bonding apparatus of claim 2 or 3, wherein the clamp unit comprises a first pawl block fixed on a bed or movable table of the diffusion bonding apparatus main body with the gripping portion directed upward, and a second pawl block and a third pawl block fixed in a mounting member disposed on the bed or movable table of the diffusion bonding apparatus main body with the gripping portion confronting, of which lower portion is rotatable and the upper portion is driven by driving means disposed on the opposite side of the gripping portion.

5. The clamp mechanism of diffusion bonding apparatus of claim 2 or 3, wherein the clamp unit comprises a first pawl block fixed on a bed or movable table of the diffusion bonding apparatus main body with the gripping portion directed upward, a second pawl block disposed at a specific angle to said first pawl block, being moved back and forth by driving means installed on a mounting member disposed on said bed or movable bed, and a third pawl block disposed at a specific angle to said first pawl block, being moved back and forth by driving means installed on a mounting member disposed on said bed or movable bed.

6. The clamp mechanism of diffusion bonding apparatus of any of claims 2 to 5, wherein the clamp unit comprises first driving means for moving back and forth a first pawl block held by a holding member disposed in the diffusion bonding apparatus main body, second driving means for moving back and forth a second pawl block held in said holding block at a specific angle to said first driving means, and third driving means for moving back and forth a third pawl block held in said holding block at a specific angle to said first driving means.
